(19) Europäisches Patentamt

European Patent Office

Office européen des brevets

(11) EP 0 373 575 B2

(12) NEUE EUROPÄISCHE PATENTSCHRIFT

(45) Veröffentlichungstag und Bekanntmachung des Hinweises auf die Entscheidung über den Einspruch:
03.02.1999 Patentblatt 1999/05

(51) Int Cl.6: C09C 1/00

(45) Hinweis auf die Patenterteilung:
13.01.1993 Patentblatt 1993/02

(21) Anmeldenummer: 89122867.8

(22) Anmeldetag: 12.12.1989

(54) **Leitfähige plättchenförmige Pigmente**

Electrically conductive pigmentary platelets

Pigments en plaquettes conducteurs d'électricité

(84) Benannte Vertragsstaaten:
BE CH DE ES FR GB IT LI NL SE

(30) Priorität: 16.12.1988 DE 3842330

(43) Veröffentlichungstag der Anmeldung:
20.06.1990 Patentblatt 1990/25

(73) Patentinhaber: MERCK PATENT GmbH
64271 Darmstadt (DE)

(72) Erfinder:
• Brückner, Hans-Dieter, Dr.
D-6100 Darmstadt 23 (DE)
• Esselborn, Reiner, Dr.
D-6100 Darmstadt (DE)

(56) Entgegenhaltungen:
EP-A- 310 340          EP-A- 359 569
EP-A- 0 139 557        EP-A- 0 220 509
EP-A- 0 307 771        US-A- 2 885 366
US-A- 3 438 796

Bemerkungen:
Die Akte enthält technische Angaben, die nach dem Eingang der Anmeldung eingereicht wurden und die nicht in dieser Patentschrift enthalten sind.

## Beschreibung

Die Erfindung betrifft leitfähige plättchenförmige Pigmente, wobei ein plättchenförmiges Substrat mit einer elektrisch leitfähigen Schicht überzogen ist.

In vielen Bereichen der Technik besteht ein Bedarf an leitfähigen Pigmenten, mit denen zum Beispiel elektrisch leitfähige, antistatische oder elektromagnetische Wellen abschirmende Kunststoffe, Lacke, Beschichtungen, Fasern oder ähnliches hergestellt werden können. In großen Mengen wird dazu leitfähiger Ruß eingesetzt, der jedoch aufgrund seiner hohen Lichtabsorption nicht für helle oder farbige Beschichtungen eingesetzt werden kann.

Daneben sind auch eine Reihe von Metallen und oxidischen Materialien wie zum Beispiel mit Antimon dotiertes Zinndioxid oder mit Zinn dotiertes Indiumoxid bekannt, die als solche oder auch als Überzug auf anderen Pigmenten oder Füllstoffen eingesetzt werden können. Mit den meisten bekannten Pigmenten können neben der Leitfähigkeit nur schwarze oder graue Farbtöne oder metallische Effekte erzielt werden. Zum Teil sind die bekannten Pigmente auch nicht temperatur- oder witterungsstabil. Aus der EP-A 139 557 ist es auch bekannt, transparente plättchenförmige Substrate, wie zum Beispiel Glimmer oder Glas, mit einer leitfähigen Beschichtung zu versehen. Die dabei gewonnenen Pigmente sind jedoch nicht deckend und eignen sich daher nicht zur Herstellung von dekorativen Beschichtungen.

Es besteht daher ein Bedarf an stabilen elektrisch leitfähigen Pigmenten, die deckend hell oder sogar farbig sind und die Beschichtungen oder Kunststoffen neben der Leitfähigkeit ein dekoratives Aussehen verleihen.

Es wurde nun gefunden, daß plättchenförmige Effektpigmente wie zum Beispiel mit Metalloxiden beschichtete Glimmerschuppen oder auch trägerfreie plättchenförmige Metalloxide, insbesondere Eisenoxide, mit einer leitfähigen Schicht versehen werden können. Allerdings besitzen die so erhaltenen dekorativen Pigmente Leitfähigkeiten, die nicht für alle Anwendungen ausreichend hoch sind. Überraschend wurde jedoch gefunden, daß die Leitfähigkeit drastisch gesteigert werden kann, wenn das Ausgangspigment zunächst mit einer gegebenenfalls hydratisierten Siliciumdioxidschicht bedeckt wird, bevor die leitfähige Schicht aufgebracht wird.

Gegenstand der Erfindung sind daher leitfähige plättchenförmige Pigmente, wobei ein plättchenförmiges Substrat mit einer elektrisch leitfähigen Schicht überzogen ist, dadurch gekennzeichnet, daß als plättchenförmiges Substrat ein plättchenförmiges Metalloxid oder ein mit einem oder mehreren Metalloxiden beschichtetes plättchenförmiges Material vorliegt und daß zwischen der Metalloxidschicht und der leitfähigen Schicht eine gegebenenfalls hydratisierte Siliciumdioxidschicht oder eine Schicht eines anderen unlöslichen Silikats angeordnet ist.

Gegenstand der Erfindung ist auch ein Verfahren zur Herstellung von leitfähigen plättchenförmigen Pigmenten, wobei ein plättchenförmiges Substrat mit einer elektrisch leitfähigen Schicht überzogen wird, das dadurch gekennzeichnet ist, daß als plättchenförmiges Substrat ein plättchenförmiges Metalloxid oder ein mit einem oder mehreren Metalloxiden beschichtetes plättchenförmiges Material eingesetzt wird und dieses vor der Beschichtung mit der leitfähigen Schicht mit einer gegebenenfalls hydratisierten Siliciumdioxidschicht oder einer Schicht eines anderen unlöslichen Silikats überzogen wird.

Als plättchenförmiges Substrat können im Prinzip alle plättchenförmige Effektpigmente eingesetzt werden wie zum Beispiel plättchenförmiges Eisenoxid, Bismutoxychlorid oder mit farbigen oder farblosen Metalloxiden beschichtete plättchenförmige Materialien, wie zum Beispiel natürlicher oder synthetischer Glimmer, andere Schichtsilikate wie Talk, Kaolin oder Sericit oder Glasplättchen. Alle diese Pigmente sind bekannt und im Handel erhältlich oder können nach bekannten Methoden hergestellt werden.

Besonders bevorzugt als Substrat sind mit Metalloxiden beschichtete Glimmerschuppen wie sie zum Beispiel aus der US-PS 30 87 828 und der US-PS 30 87 829 bekannt sind. Als Metalloxide werden dabei sowohl farblose hochbrechende Metalloxide wie insbesondere Titandioxid und/oder Zirkoniumdioxid verwendet, als auch farbige Metalloxide wie zum Beispiel Chromoxid, Nickeloxid, Kupferoxid, Kobaltoxid und insbesondere Eisenoxide wie zum Beispiel $Fe_2O_3$ oder $Fe_3O_4$ oder Mischungen solcher Metalloxide. Solche Metalloxid/Glimmerpigmente sind unter den Handelsnamen Afflair® und Iriodin® im Handel erhältlich.

Besonders bevorzugt als plättchenförmige Substrate sind daneben auch insbesondere plättchenförmige Eisenoxide wie sie zum Beispiel aus den EP-A 14 382, 68 311, 265 820, 268 072 und 283 852 bekannt sind.

Erfindungsgemäß werden diese Substrate mit einer gegebenenfalls hydratisierten Kieselsäureschicht oder der Schicht eines anderen unlöslichen Silikats wie z.B. Aluminiumsilikat belegt Dazu wird das Substrat in Wasser suspendiert und es wird vorzugsweise bei erhöhter Temperatur und einem geeigneten pH-Wert die Lösung eines löslichen Silikats und ggf. eines Metallsalzes zugegeben, wobei gegebenenfalls durch gleichzeitige Zugabe von Säure wie zum Beispiel Salz- oder Schwefelsäure der pH-Wert im geeigneten Bereich gehalten wird. Als Silikat kann im Prinzip jedes lösliche Silikat eingesetzt werden. Natriumsilikat wird jedoch der leichten Zugänglichkeit, des günstigen Preises und der hohen Reinheit wegen bevorzugt.

Die Auffällung von Kieselsäure geschieht vorzugsweise in einem schwach sauren oder alkalischen Milieu, d.h. in einem pH-Bereich von vorzugsweise etwa 6-11,5. Dabei hat es sich als am einfachsten erwiesen, den geeigneten pH-Wert durch Zugabe von Silikatlösung einzustellen und während des weiteren Zudosierens von Silikat durch gleichzeitige Säurezugabe aufrechtzuerhalten.

Die auf diese Weise aufgebrachte Kieselsäureschicht sollte zumindest etwa 5 Gew.%, berechnet als $SiO_2$ und bezogen auf das Substrat, des Pigments ausmachen. Nach oben sind an sich keine Grenzen gesetzt, aber es zeigt sich, daß durch sehr dicke $SiO_2$-Schichten keine Zunahme an Leitfähigkeit mehr bewirkt werden kann. Bevorzugt sind daher Kieselsäureschichten von etwa 5-20 Gew.%, insbesondere etwa 10 %.

Das mit Kieselsäure beschichtete Substrat kann vor der anschließenden Beschichtung mit der leitfähigen Schicht aus der Suspension abgetrennt und gegebenenfalls gewaschen, getrocknet und bei einer Temperatur von bis zu 1000 °C geglüht werden. Es ist jedoch auch möglich, die Beschichtung mit der leitfähigen Schicht direkt an die Kieselsäurebeschichtung anzuschließen, ohne das Pigment vorher aus der Suspension abzutrennen. Da auch die Kieselsäurebeschichtung sich direkt an die Herstellung des plättchenförmigen Substrats anschließen kann, also zum Beispiel an die Beschichtung eines plättchenförmigen Materials wie Glimmer oder Glas mit Metalloxiden, ist damit eine besonders vorteilhafte Verfahrensführung im Eintopfverfahren möglich. Überraschend zeigte sich dabei, daß die im Eintopfverfahren hergestellten Pigmente häufig sogar eine noch bessere Leitfähigkeit aufweisen.

Das Aufbringen der leitfähigen Schicht geschieht in an sich bekannter Weise, zum Beispiel nach den in der EP-A 139 557 beschriebenen Verfahren. Dabei sind alle üblichen leitfähigen Metalloxide bzw. Metalloxidgemische einsetzbar. Eine Auswahl solcher Materialien ist in der EP-A 139 557 auf Seite 5, Zeilen 5-19 genannt. Bevorzugt wird jedoch eine leitfähige Schicht aus mit Antimon dotiertem Zinndioxid, die in einer Menge von etwa 25-100 Gew.%, bezogen auf das plättchenförmige Substrat, aufgebracht wird, insbesondere in einer Menge von etwa 50-75 Gew.%. Größere Mengen sind zwar an sich auch möglich, es wird damit jedoch keine weitere Erhöhung der Leitfähigkeit erzielt und die Pigmente werden zunehmend dunkler.

In der Schicht wird vorzugsweise ein Zinn/Antimon-Verhaltnis von etwa 2 : 1 bis 20 : 1, vorzugsweise von etwa 5 : 1 bis etwa 10 : 1 eingehalten. Bei zu geringem Antimongehalt lassen sich keine hohen Leitfähigkeiten erzielen, während bei höherem Antimongehalt die Pigmente zunehmend dunkler werden.

Die gewünschte homogene Verteilung von Zinn und Antimon in der leitfähigen Schicht läßt sich problemlos dadurch erreichen, daß die Salze von Zinn und Antimon, zum Beispiel die Chloride, entweder gemeinsam in einer Lösung oder in zwei getrennten Lösungen kontinuierlich und im vorbestimmten Mischungsverhältnis der wäßrigen Suspension des mit Kieselsäure beschichteten Substrats bei einem geeigneten pH-Wert von etwa 1 bis 5 und einer geeigenten Temperatur von etwa 50 bis 90 °C so zudosiert werden, daß jeweils unmittelbar eine Hydrolyse und Abscheidung auf dem plättchenförmigen Substrat erfolgt.

Nach Beendigung der Beschichtung werden die Pigmente aus der Suspension abgetrennt, ggf. gewaschen und getrocknet und in der Regel bei Temperaturen im Bereich von etwa 300-900 °C geglüht. Je nach Wahl des Ausgangsmaterials sind die erfindungsgemäßen leitfähigen Pigmente silberfarbig weiß oder besitzen eine Pulver- und/oder Interferenzfarbe. Auch die Größe der erfindungsgemäßen Pigmente wird durch die Wahl des Ausgangsmaterials bestimmt und wird in der Regel in einem Bereich von etwa 1-200 μm, insbesondere etwa 5-100 μm, gewählt.

Beispiel 1

a) Beschichtung mit Siliciumdioxid

100 g eines Titandioxid/Glimmerpigments mit silberner Interferenzfarbe und einer Teilchengröße von 10-60 μm (Iriodin® 100 der Firma E. Merck, Darmstadt; 27 % $TiO_2$, 73 % Glimmer) werden in 2000 ml Wasser suspendiert, auf 60 °C erhitzt und innerhalb von 4 Stunden unter Rühren kontinuierlich mit 1000 ml einer Natriumwasserglaslösung (10 g $SiO_2$ pro Liter) versetzt, wobei mit Hilfe von 2%iger Salzsäure der pH-Wert konstant auf 9,0 gehalten wird. Nach beendeter Zugabe wird noch eine Stunde nachgerührt, der Feststoff abfiltriert, gewaschen, bei 110 °C getrocknet und 30 Minuten bei 800 °C geglüht.

b) Beschichtung mit Zinn/Antimon-Oxid

Eine mit Wasser auf 1000 ml verdünnte Lösung von 98,5 g $SnCl_4 \cdot 5\ H_2O$ und 11,3 g $SbCl_3$ in 200 ml 32%iger Salzsäure wird innerhalb von 5 Stunden zu der auf 75 °C erwärmten Suspension des nach Beispiel 1a mit $SiO_2$ beschichteten Pigments in 2000 ml Wasser zugegeben, wobei mit Hilfe von 32%iger Natronlauge der pH-Wert konstant auf 1,6 gehalten wird. Danach wird der Feststoff abfiltriert, mit etwa 20 l Wasser chloridfrei gewaschen, bei 110 °C getrocknet und 30 Minuten bei 800 °C geglüht. Man erhält ein helles Pigment mit goldener Interferenzfarbe und der Zusammensetzung: 45,6 % Glimmer, 16,9 % $TiO_2$, 6,25 % $SiO_2$, 31,25 % Zinn/Antimon-Oxid und einem Zinn/Antimon-Verhältnis von 85 : 15. Die Menge der $SiO_2$-Zwischenschicht, bezogen auf das Substrat, beträgt 10 % und die Menge der leitfähigen Schicht, bezogen auf das Substrat, beträgt 50 %. Der spezifische widerstand des Pigments beträgt 20 Ohm · Zentimeter, gemessen in folgender Meßanordnung:

In einem Acrylglas-Rohr mit einem Innendurchmesser von d = 1 cm werden etwa 0,5 g Pigment mit Hilfe von zwei Metallstempeln zusammengepreßt und der zwischen diesen Metallstempeln auftretende elektrische Widerstand R gemessen. Aus der Schichtdicke L des komprimierten Pigments ergibt sich der spezifische Widerstand $\delta$ nach der Formel

$$\delta = R \cdot \frac{(d/2)^2}{L} \; [\text{Ohm} . \text{cm}]$$

Beispiel 2 (Vergleichsbeispiel)

100 g des Titandioxid/Glimmerpigments aus Beispiel 1 werden wie in Beispiel 1b beschrieben mit Zinn/Antimon-Oxid beschichtet, ohne daß jedoch zuvor nach Beispiel 1a die SiO$_2$-Zwischenschicht aufgebracht wurde. Man erhält ein helles Pigment mit goldener Interferenzfarbe und einem spezifischen Widerstand von 500 Ohm · Zentimeter.

Beispiel 3

100 g eines Titandioxid/Glimmer-Pigments mit blauer Interferenzfarbe und einer Teilchengröße von 10-60 µm (Iriodin® 225 der Firma E. Merck, Darmstadt; 52 % TiO$_2$, 48 % Glimmer) werden entsprechend Beispiel 1 mit SiO$_2$ und anschließend mit Zinn/Antimon-Oxid beschichtet Man erhält ein helles Pigment mit leuchtend grüner Interferenzfarbe und einem spezifischen Widerstand von 25 Ohm · Zentimeter.

Beispiel 4 (Vergleichsbeispiel)

Es wird analog Beispiel 3 gearbeitet, jedoch ohne Aufbringen der SiO$_2$-Schicht. Man erhält ein helles Pigment mit grüner Interferenzfarbe und einem spezifischen Widerstand von 600 Ohm · Zentimeter.

Beispiel 5

100 g eines mit Eisenoxid beschichteten Glimmerpigments einer Teilchengröße von 10-60 µm (Iriodin 500 der Firma E. Merck, Darmstadt; 34 % Fe$_2$O$_3$, 66 % Glimmer) werden analog Beispiel 1 mit SiO$_2$ und Zinn/Antimon-Oxid beschichtet. Man erhält ein bronzefarbenes Interferenzpigment mit hervorragendem Deckvermögen und einem spezifischen Widerstand von 20 Ohm · Zentimeter.

Beispiel 6 (Vergleichsbeispiel)

Es wird analog Beispiel 5 gearbeitet, jedoch ohne Aufbringen der SiO$_2$-Zwischenschicht. Man erhält ein bronzefarbenes Interferenzpigment mit gutem Deckvermögen und einem spezifischen Widerstand von etwa $1 \cdot 10^6$ Ohm · Zentimeter.

Beispiel 7

Zu einer auf 75 °C erwärmten Suspension von 100 g Muskovit-Glimmer einer Teilchengröße von 1-15 µm in 2000 ml Wasser werden kontinuierlich innerhalb einer Stunde 318 ml einer 18%igen wäßrigen Titantetrachloridlösung zugegeben, wobei mit Hilfe von 32%iger Natronlauge der pH-wert konstant auf 2,2 gehalten wird. Nach 30minütigem Nachrühren, wird der pH-Wert auf 9,0 erhöht und es wird entsprechend Beispiel 1a eine SiO$_2$-Schicht aufgefällt. Analog Beispiel 1b, jedoch unter Verwendung von 147,8 g SnCl$_4$ · 5 H$_2$O und 17,0 g SbCl$_3$, wird anschließend eine Zinn/Antimon-Oxidschicht aufgebracht. Man erhält ein Pigment der Zusammensetzung 46,5 % Glimmer, 14 % TiO$_2$, 4,6 % SiO$_2$ und 34,9 % Zinn/Antimon-Oxid. Der SiO$_2$-Gehalt, bezogen auf das Substrat Glimmer/TiO$_2$, beträgt 7,7 % und der Gehalt an Zinn/Antimon-Oxid, bezogen auf das Substrat, beträgt 57,7 %. Das Pigment hat ein hellgraue Farbe, gutes Deckvermögen und einen spezifischen Widerstand von 35 Ohm · Zentimeter.

Beispiel 8

Man arbeitet analog Beispiel 7, wobei jedoch das mit Kieselsäure beschichtete Pigment nicht abgetrennt, gewaschen, getrocknet und geglüht wird, sondern direkt in der Suspension weiter mit Zinn/Antimon-Oxid belegt wird. Man erhält ein Pigment gleicher Zusammensetzung mit einem spezifischen Widerstand von 17 Ohm · Zentimeter.

**Patentansprüche**

**Patentansprüche für folgende Vertragsstaaten : DE, FR, GB, NL**

1. Leitfähige plättchenförmige Pigmente, wobei ein plättchenförmiges Substrat mit einer elektrisch leitfähigen Schicht überzogen ist, dadurch gekennzeichnet, daß als plättchenförmiges Substrat ein plättchenförmiges Metalloxid oder ein mit einem oder mehreren Metalloxiden beschichtetes plättchenförmiges Material vorliegt und daß zwischen der Metalloxidschicht und der leitfähigen Schicht eine gegebenenfalls hydratisierte Siliciumdioxidschicht oder eine Schicht eines anderen unlöslichen Silikats angeordnet ist mit der Maßgabe, daß das Substrat nicht plättchenförmiges Eisenoxid ist.

2. Pigmente nach Anspruch 1, dadurch gekennzeichnet, daß das plättchenförmige Material Glimmer ist.

3. Pigmente nach Anspruch 1, dadurch gekennzeichnet, daß die leitfähige Schicht aus mit Antimon dotiertem Zinndioxid besteht.

4. Pigmente nach Anspruch 1, dadurch gekennzeichnet, daß die gegebenenfalls hydratisierte Siliciumdioxidschicht in einer Menge von 5-20 Gew.%, bezogen auf das plättchenförmige Substrat, vorliegt.

5. Verfahren zur Herstellung von leitfähigen plättchenförmigen Pigmenten, wobei ein plättchenförmiges Substrat mit einer elektrisch leitfähigen Schicht überzogen wird, dadurch gekennzeichnet, daß als plättchenförmiges Substrat ein plättchenförmiges Metalloxid oder ein mit einem oder mehreren Metalloxiden beschichtetes plättchenförmiges Material eingesetzt wird und dieses vor der Beschichtung mit der leitfähigen Schicht mit einer gegebenenfalls hydratisierten Siliciumdioxidschicht oder einer Schicht eines anderen unlöslichen Silikats überzogen wird mit der Maßgabe, daß das Substrat nicht plättchenförmiges Eisenoxid ist.

6. Verfahren nach Anspruch 5, dadurch gekennzeichnet, daß als plättchenförmiges Substrat mit Metalloxiden beschichtete Glimmerplättchen eingesetzt werden.

7. Verfahren nach Anspruch 5, dadurch gekennzeichnet, daß als leitfähige Schicht eine mit Antimon dotierte Zinndioxidschicht aufgebracht wird.

8. Verfahren nach Anspruch 5, dadurch gekennzeichnet, daß die gegebenenfalls hydratisierte Siliciumdioxidschicht in einer Menge von 5-20 Gew.%, bezogen auf das plättchenförmige Substrat, aufgebracht wird.

**Patentansprüche für folgende Vertragsstaaten : BE, CH, ES, IT, LI, SE**

1. Leitfähige plättchenförmige Pigmente, wobei ein plättchenförmiges Substrat mit einer elektrisch leitfähigen Schicht überzogen ist, dadurch gekennzeichnet, daß als plättchenförmiges Substrat ein plättchenförmiges Metalloxid oder ein mit einem oder mehreren Metalloxiden beschichtetes plättchenförmiges Material vorliegt und daß zwischen der Metalloxidschicht und der leitfähigen Schicht eine gegebenenfalls hydratisierte Siliciumdioxidschicht oder eine Schicht eines anderen unlöslichen Silikats angeordnet ist.

2. Pigmente nach Anspruch 1, dadurch gekennzeichnet, daß das plättchenförmige Material Glimmer ist.

3. Pigmente nach Anspruch 1, dadurch gekennzeichnet, daß die leitfähige Schicht aus mit Antimon dotiertem Zinndioxid besteht.

4. Pigmente nach Anspruch 1, dadurch gekennzeichnet, daß die gegebenenfalls hydratisierte Siliciumdioxidschicht in einer Menge von 5-20 Gew.%, bezogen auf das plättchenförmige Substrat, vorliegt.

5. Verfahren zur Herstellung von leitfähigen plättchenförmigen Pigmenten, wobei ein plättchenförmiges Substrat mit einer elektrisch leitfähigen Schicht überzogen wird, dadurch gekennzeichnet, daß als plättchenförmiges Substrat ein plättchenförmiges Metalloxid oder ein mit einem oder mehreren Metalloxiden beschichtetes plättchenförmiges Material eingesetzt wird und dieses vor der Beschichtung mit der leitfähigen Schicht mit einer gegebenenfalls hydratisierten Siliciumdioxidschicht oder einer Schicht eines anderen unlöslichen Silikats überzogen wird.

6. Verfahren nach Anspruch 5, dadurch gekennzeichnet, daß als plättchenförmiges Substrat mit Metalloxiden beschichtete Glimmerplättchen eingesetzt werden.

7. Verfahren nach Anspruch 5, dadurch gekennzeichnet, daß als leitfähige Schicht eine mit Antimon dotierte Zinndioxidschicht aufgebracht wird.

8. Verfahren nach Anspruch 5, dadurch gekennzeichnet, daß die gegebenenfalls hydratisierte Siliciumdioxidschicht in einer Menge von 5-20 Gew.%, bezogen auf das plättchenförmige Substrat, aufgebracht wird.

**Claims**

**Claims for the following Contracting States : DE, FR, GB, NL**

1. Conductive lamellar pigments in which a lamellar substrate is coated with an electrically conductive layer, characterized in that a lamellar metal oxide or a lamellar material coated with one or more metal oxides is present as the lamellar substrate and that an optionally hydrated silicon dioxide layer or a layer of another insoluble silicate is arranged between the metal oxide layer and the conductive layer, with the proviso that the substrate is not lamellar iron oxide.

2. Pigments according to Claim 1, characterized in that the lamellar material is mica.

3. Pigments according to Claim 1, characterized in that the conductive layer consists of tin dioxide doped with antimony.

4. Pigments according to Claim 1, characterized in that the optionally hydrated silicon dioxide layer is present in an amount of about 5-20 % by weight relative to the lamellar substrate.

5. Process for the manufacture of conductive lamellar pigments, in which a lamellar substrate is coated with an electrically conductive layer, characterized in that a lamellar metal oxide or a lamellar material coated with one or more metal oxides is used as the lamellar substrate and this lamellar substrate is coated with an optionally hydrated silicon dioxide layer or a layer of another insoluble silicate before being coated with the conductive layer, with the proviso that the substrate is not lamellar iron oxide.

6. Process according to Claim 5, characterized in that mica platelets coated with metal oxides are used as the lamellar substrate.

7. Process according to Claim 5, characterized in that a coating of tin dioxide doped with antimony is applied as the conductive layer.

8. Process according to Claim 5, characterized in that the optionally hydrated silicon dioxide layer is applied in an amount of 5-20 % by weight relative to the lamellar substrate.

**Claims for the following Contracting States : BE, CH, LI, ES, IT, SE**

1. Conductive lamellar pigments in which a lamellar substrate is coated with an electrically conductive layer, characterized in that a lamellar metal oxide or a lamellar material coated with one or more metal oxides is present as the lamellar substrate and that an optionally hydrated silicon dioxide layer or a layer of another insoluble silicate is arranged between the metal oxide layer and the conductive layer.

2. Pigments according to Claim 1, characterized in that the lamellar material is mica.

3. Pigments according to Claim 1, characterized in that the conductive layer consists of tin dioxide doped with antimony.

4. Pigments according to Claim 1, characterized in that the optionally hydrated silicon dioxide layer is present in an amount of about 5-20 % by weight relative to the lamellar substrate.

5. Process for the manufacture of conductive lamellar pigments, in which a lamellar substrate is coated with an electrically conductive layer, characterized in that a lamellar metal oxide or a lamellar material coated with one or more metal oxides is used as the lamellar substrate and this lamellar substrate is coated with an optionally hydrated silicon dioxide layer or a layer of another insoluble silicate before being coated with the conductive layer.

6. Process according to Claim 5, characterized in that mica platelets coated with metal oxides are used as the lamellar substrate.

7. Process according to Claim 5, characterized in that a coating of tin dioxide doped with antimony is applied as the conductive layer.

8. Process according to Claim 5, characterized in that the optionally hydrated silicon dioxide layer is applied in an amount of 5-20 % by weight relative to the lamellar substrate.

**Revendications**

**Revendications pour les Etats contractants suivants : DE, FR, GB, NL**

1. Pigments en plaquettes conducteurs d'électricité, pour lesquels un substrat en plaquettes est revêtu d'une couche conductrice de l'électricité, caractérisés en ce qu'existe comme substrat en plaquettes un oxyde métallique en plaquettes ou une matière en plaquettes revêtue avec un ou plusieurs oxydes métalliques et qu'est disposée entre la couche d'oxyde métallique et la couche conductrice une couche d'oxyde de silicium éventuellement hydraté ou une couche d'un autre silicate insoluble à la condition absolue que le substrat ne soit pas un oxyde de fer en plaquette.

2. Pigments selon la revendication 1, caractérisés en ce que la matière en plaquettes est du mica.

3. Pigments selon la revendication 1, caractérisés en ce que la couche conductrice consiste en du dioxyde d'étain dopé avec de l'antimoine.

4. Pigments selon la revendication 1, caractérisés en ce que la couche de dioxyde de silicium éventuellement hydraté est en une quantité de 5-20 % en poids, par rapport au substrat en plaquettes.

5. Procédé pour la préparation de pigments en plaquettes conducteurs, selon lequel on recouvre un substrat en plaquettes avec une couche conductrice de l'électricité, caractérisé en ce qu'on met en oeuvre comme substrat en plaquettes un oxyde métallique en plaquettes ou une matière en plaquettes revêtue avec un ou plusieurs oxydes métalliques et on le recouvre, avant le revêtement avec la couche conductrice, avec une couche de dioxyde de silicium éventuellement hydraté ou avec une couche d'un autre silicate insoluble à la condition absolue que le substrat ne soit pas un oxyde de fer en plaquette.

**6.** Procédé selon la revendication 5, caractérisé en ce qu'on utilise comme substrat en plaquettes des plaquettes de mica recouvertes d'oxydes métalliques.

**7.** Procédé selon la revendication 5, caractérisé en ce qu'on applique comme couche conductrice une couche de dioxyde d'étain dopée avec de l'antimoine.

**8.** Procédé selon la revendication 5, caractérisé en ce que la couche de dioxyde de silicium éventuellement hydraté est appliqué en une quantité de 5-20 % en poids, par rapport au substrat en plaquettes.

**6.** Procédé selon la revendication 5, caractérisé en ce qu'on utilise comme substrat en plaquettes des plaquettes de mica recouvertes d'oxydes métalliques.

**7.** Procédé selon la revendication 5, caractérisé en ce qu'on applique comme couche conductrice une couche de dioxyde d'étain dopée avec de l'antimoine.

**8.** Procédé selon la revendication 5, caractérisé en ce que la couche de dioxyde de silicium éventuellement hydraté est appliqué en une quantité de 5-20 % en poids, par rapport au substrat en plaquettes.

**Revendications pour les Etats contractants suivants : BE, CH, LI, ES, IT, SE**

**1.** Pigments en plaquettes conducteurs d'électricité, pour lesquels un substrat en plaquettes est revêtu d'une couche conductrice de l'électricité, caractérisés en ce qu'existe comme substrat en plaquettes un oxyde métallique en plaquettes ou une matière en plaquettes revêtue avec un ou plusieurs oxydes métalliques et qu'est disposée entre la couche d'oxyde métallique et la couche conductrice une couche d'oxyde de silicium éventuellement hydraté ou une couche d'un autre silicate insoluble.

**2.** Pigments selon la revendication 1, caractérisés en ce que la matière en plaquettes est du mica.

**3.** Pigments selon la revendication 1, caractérisés en ce que la couche conductrice consiste en du dioxyde d'étain dopé avec de l'antimoine.

**4.** Pigments selon la revendication 1, caractérisés en ce que la couche de dioxyde de silicium éventuellement hydraté est en une quantité de 5-20 % en poids, par rapport au substrat en plaquettes.

**5.** Procédé pour la préparation de pigments en plaquettes conducteurs, selon lequel on recouvre un substrat en plaquettes avec une couche conductrice de l'électricité, caractérisé en ce qu'on met en oeuvre comme substrat en plaquettes un oxyde métallique en plaquettes ou une matière en plaquettes revêtue avec un ou plusieurs oxydes métalliques et on le recouvre, avant le revêtement avec la couche conductrice, avec une couche de dioxyde de silicium éventuellement hydraté ou avec une couche d'un autre silicate insoluble.